# EUROPEAN PATENT APPLICATION

(11) **EP 2 672 264 A1**
(43) Date of publication of application: **11.12.2013**
(21) Application number: 12170943.0
(22) Date of filing: 06.06.2012
(51) Int. Cl.: G01N 27/447

(54) **Cartridge for a bio separation instrument, a method for calibrating a bio separation instrument, and a bio separation instrument**

(71) Applicant: Qiagen Instruments AG, 8634 Hombrechtikon (CH)
(72) Inventor: The designation of the inventor has not yet been filed
(74) Representative: Roth, Carla

(57) **Abstract**

The application provides a calibration cartridge for a multi-channel separation instrument, wherein said calibration cartridge comprises at least two alignment devices for aligning excitation means, wherein each of said alignment devices comprises a detection point characterized in that the calibration cartridge comprises a calibration device which intersects the detection points of the at least two alignment devices. Furthermore, suitable calibration devices, in particular calibration capillaries and associated calibration technologies are described.

## Description

### FIELD OF THE INVENTION

The invention pertains to the field of separation systems for separating analytes such as nucleic acids, and more particularly a calibration cartridge for a separation instrument and a method for calibrating a separation instrument for analytes.

### BACKGROUND OF THE INVENTION

Analysis of biological samples often requires the separation of molecules, for example nucleic acids such as DNA molecules. Often the separation relies on electrophoresis, which refers to the movement of a charged molecule under the influence of an electric field. Electrophoresis can be used to separate molecules that have equivalent charge-to-mass ratios but different masses. Nucleic acids such as DNA molecules are only one example for such molecules that can be separated by electrophoresis.

Very often capillary electrophoresis instruments are used which employ a plurality of separation capillaries, thereby allowing the separation and analysis of multiple samples in parallel in the separation capillaries. Capillary electrophoresis instruments use very strong electric fields to separate molecules with narrow-bore capillaries (typically 20 to 250µm internal diameter). When electrophoresis is applied to a separation capillary, the sample separates into its components, and the components migrate through the separation capillary to a detection window where the components can be analyzed.

Several detection techniques are well-known and used for analyzing the components. Examples include radiation absorption detection which involves directing incident radiation at the components to be analyzed in the detection window of the separation capillary and measuring the amount or intensity of radiation that passes through the components, or the equivalent decrease in intensity or the amount of radiation that is absorbed by the components (i.e., the attenuation of the incident radiation). Another technique is emissive radiation detection, for example fluorescence detection, which is usually the detection method in the field of DNA analysis because of its sensitivity compared to other detection methods. The molecules to be separated and analysed are marked, e.g. using a fluorescent material. For nucleic acids such as DNA, intercalating dyes such as ethidium bromide are usually used. The nucleic acid molecules can be analyzed by directing light through the separation capillary wall at a detection window.

There are numerous challenges in designing a capillary electrophoresis (CE) instrument. To maximize signal intensity and sensitivity and resolution of detection, the precise position and alignment of particular capillary electrophoresis instrument components, such as the separation capillary, the excitation light fiber and the detection lens, with respect to each other are critical design concerns. To improve efficacy a capillary electrophoresis instrument makes use of a cartridge comprising at least two separation capillaries, for example twelve separation capillaries, in which samples, e.g. nucleic acid containing samples are investigated. For each of the separation capillaries an excitation system including a light source, for example a LED, and an excitation fiber is provided. The light of the light source is coupled to the excitation fiber by use of a lens so that the excitation fiber receives the light from the lens and directs the light to the detection zone. Further, the capillary electrophoresis instrument comprises a radiation detector for detecting the radiation emitted from the sample. Usually the radiation detector comprises a detector probe which contains a probe housing for housing a lens and an emission collection fiber. The fluorescence emissions from the separated components at the detection window of the separation capillary are collected through the lens, and directed through an emission collection fiber to a detector. Each of the separation capillaries may have transparent walls, or opaque walls provided with a transparent window to direct emissions to the lens. At the detector, the emission signal may be filtered by a single or multiple emission filters and can be read (detected) in a time-multiplexed (time-staggered) scheme. The separation capillaries used in CE are relatively small, and CE requires that the detection zone be small enough to reduce the scattered background/excitation, lower the baseline noise, increase signal/noise ratio and improve detection sensitivity. It is critical for the excitation fiber to be precisely positioned and aligned such that a substantial portion of the light beam is directed through the capillary wall at the separated sample components. Otherwise, the light can scatter at the outside capillary wall/air interface and inside capillary wall/buffer interface (Raman scattering), which can obscure or corrupt the fluorescence emission intensity. The problem can be multiplied if more than one excitation fiber is used. Therefore, having one or more excitation fiber positioned and aligned precisely with the separation capillary, in particular the detection window is desirable. Additionally, sample size and background noise pose additional concerns in designing CE- based instruments. Only a relatively small amount of sample, e.g. DNA, is being analyzed at any given time. As such, the small sample emits fluorescence signals at levels that compete with background noise. The background noise can come from the light source, from Raman scattering, or from the materials of other instrument components. The fluorescence signal can also scatter at the wall interfaces. A small misalignment of the detection lens can have large effects on the detection sensitivity. Respective capillary electrophoresis instruments and the associated problems with the precise alignment of the different elements are e.g. described in WO2004/055509 and US2002/0123073.

Furthermore, if more than one separation capillary is used, what is the case in multi-channel separation instruments such as CE instruments wherein a separation cartridge is inserted that comprises a plurality of separation capillaries, there might be considerable variations between the radiation that is detected from the individual capillaries that does not result from differences in the analyzed sample but instead result e.g. from differences in the excitation/and or detection system that is associated, in particular optically coupled with an individual separation capillary. As discussed above, if several separation capillaries are used in parallel, for each separation capillary an excitation system and a detector system is used, respectively is optically coupled so that the above described problems can occur individually at each separation capillary. Furthermore, in particular the amount of light provided by the individual excitation systems may lead to variations. Furthermore, also the performance of the light sources of the excitation system, e.g. LEDs, can decrease over time. This can lead to severe variations in the results that are obtained, respectively that are measured with the individual separation capillaries. Thus, even if the same sample is analyzed in the different separation capillaries of the multi-channel separation instrument, considerable differences in the measured excitation spectra might occur which are caused by differences in the excitation or the detection systems that are used in conjunction with each of the separation capillaries. However, the overall aim is to provide a separation instrument that uses multiple separation capillaries, wherein, however, the physical framework conditions are for each separation capillary as equal as possible so that the excitation spectra measured with the different separation capillaries are substantially the same for a given sample. Furthermore, to establish a homogenous measurement over all separation channels is also desirous in order to optimize the resolution of the detector. Thus, there is a need to provide a separation instrument, wherein for a given sample, substantially the same measurement results are achieved irrespective of which separation capillary of the instrument is used. In order to identify differences in the measurement that are attributable to variations or differences in the excitation and/or detection systems that are used with the individual capillaries of the separation instrument, there is a need for suitable calibration technologies. Suitable calibration technologies would allow to provide a separation instrument which provides substantial homogenous physical framework conditions for each separation channel.

Thus, the object of the present invention is to provide suitable calibration technologies that would overcome one or more limitations of the prior art.

### SUMMARY OF THE INVENTION

The present invention is based on the finding that the calibration of a multi-channel separation instrument such as in particular a capillary electrophoresis instrument that is operated using a plurality of separation capillaries can be significantly improved if a calibration device, such as a calibration capillary, is used which extends through the detection zones of the detection systems of the multi-channel separation instrument. Instead of the individual separation capillaries that are normally used for separating the analytes, wherein one separation capillary extends through the detection zone of one detection system of the separation instrument, a calibration device such as a calibration capillary is used which extends through multiple and preferably all detection zones of the detection systems of the multi-channel separation instrument. Each detection zone of the multi-channel separation instrument is usually associated and thus optically coupled with one excitation system and one detection system. By using a calibration device such as a single calibration capillary which runs through the plurality of detection zones of the multi-channel separation instrument, identical optical conditions are provided at each detection zone with respect to the sample that is analysed because the calibration device has and thus provides at all detection zones the same optical characteristics. Hence, if the multi-channel separation instrument would be perfectly calibrated, the measured signal would be identical at all detection zones. However, as discussed above, differences or variations in the excitation and/or detector systems, in particular the radiation source of the excitation system, usually result in that different signals are measured even though an identical sample - here the calibration device which preferably is a single calibration capillary - is analysed at all detection zones. Hence, if a respective deviation is observed, this indicates that there is a difference in the excitation and/or detector system that is associated with the affected detection zone(s). This identified deviation can be handled or corrected e.g. by an amplification value which might be stored in a memory of the separation instrument or by making other appropriate adjustments in the excitation and/or detector systems. Performing a respective calibration is an important quality control in the manufacturing of a multi-channel separation system. Optionally, also repeated rounds of calibration and adjustments can be performed until the desired uniformity between the different separation channels with respect to the physical framework conditions is achieved. Furthermore, performing a respective calibration is also of particular use during the life-time and maintenance of a multi-channel separation instrument such as a CE instrument because a respective calibration allows to analyze whether the instrument still operates with the necessary accuracy. If performing the calibration according to the present invention provides that this is not the case, appropriate adjustments and repairs (e.g. an exchange of a defect light source such as an LED) can be performed. Thus, using the calibration technology according to the present invention will lead to improved results because in particular any degradation of the excitation systems can be easily identified and corrected. As discussed above, it is assumed that the degradation is predominantly caused by a deterioration of the LEDs comprised in the excitation system. Further, malfunctioning LEDs can be identified.

According to a first aspect, the present invention provides a calibration cartridge for a multi-channel separation instrument, such as a CE instrument, wherein said calibration cartridge comprises at least two alignment devices for aligning excitation means and wherein each of said alignment devices comprises a detection point for optical coupling of said alignment device with a detection system of the multi-channel separation instrument **characterized in that** the calibration cartridge comprises a calibration device, preferably a calibration capillary, which intersects the detection points of the at least two alignment devices.

According to a second aspect, the present invention provides a separation instrument, preferably a CE instrument, comprising
a) a calibration cartridge according to the first aspect of the present invention,
b) a plurality of excitation systems, wherein each excitation system is associated with a different alignment device of the calibration cartridge,
c) a plurality of detection systems for detecting radiation emissions at the detection points of the alignment devices, wherein each detection system is associated with a different alignment device.

According to a third aspect, the present invention provides a method for calibrating a separation instrument, preferably a CE instrument, wherein said separation instrument comprises
a) a plurality of excitation systems each comprising a radiation source associated with an excitation means and
b) a plurality of detection systems for detecting radiation emissions
   wherein a single calibration device is provided which is optically coupled to the plurality of excitation means and the plurality of detection systems, wherein a signal is measured with each detection system caused by excitation of the calibration device by each excitation means.

According to a fourth aspect, the present invention provides a calibration capillary comprising a stilbene or stilbene derivative.

Other objects, features, advantages and aspects of the present application will become apparent to those skilled in the art from the following description and appended claims. It should be understood, however, that the following description, appended claims, and specific examples, while indicating preferred embodiments of the application, are given by way of illustration only. Various changes and modifications within the spirit and scope of the disclosed invention will become readily apparent to those skilled in the art reading the following.

### DETAILED DESCRIPTION OF THE INVENTION

According to a first aspect, the present invention provides a calibration cartridge for a multi-channel separation instrument, wherein said calibration cartridge comprises at least two alignment devices for aligning excitation means and wherein each of said alignment devices comprises a detection point **characterized in that** the calibration cartridge comprises a calibration device which intersects the detection points of the at least two alignment devices.

The multi-channel separation instrument for which the calibration cartridge can be used preferably is a capillary electrophoresis (CE) instrument. Respective CE instruments are well known to the skilled person and are also described in the background part of the present application. Such CE instruments are usually operated using a multi-channel separation cartridge for separating the analytes. Respective multi-channel separation cartridges are for example described in WO 2004/055509, the disclosure of which is with respect to potential designs of the separation cartridge and the CE instrument herein incorporated by reference. The present invention now provides a calibration cartridge that can be used for calibrating a respective separation instrument, thereby allowing to improve its accuracy. Using the calibration cartridge according to this invention allows to analyse whether the separation instrument is working with the desired accuracy and accordingly, provides correct, homogenous results. If the calibration using the calibration cartridge according to the present invention provides that this is not the case and that e.g. the physical framework conditions differ between the individual channels of the separation instrument, suitable corrections and adjustments can be made (examples are described above and below) which reduce or even eliminate the variations that result from the physical framework conditions such as in particular the excitation system that is associated with the involved channel. The calibration cartridge comprises at least two alignment devices for aligning excitation means. Preferably, the excitation means that is aligned by the alignment device is an excitation fiber. It allows to introduce excitation radiation from a radiation source, in particular a light source such as an LED. Also more than one excitation means and hence excitation fibers can be aligned and thus accurately positioned by each alignment device. Furthermore, each alignment device comprises a detection point. Said detection point allows to optically couple the alignment device, respectively a device comprised therein such as the calibration device (see below) with a detection system of the multi-channel separation instrument. Preferably, when the calibration cartridge is inserted into the multi-channel instrument, each alignment device of the calibration cartridge is associated with one excitation system and one detection system of the multi-channel instrument, thereby allowing to control the performance of each excitation/detection system. The detection point of the alignment device can for example be an aperture in the alignment device. Through said aperture, the detection system of the multi-channel separation instrument can detect radiation that is emitted from the alignment device, in particular the calibration device that is comprised in the alignment device.

The calibration cartridge according to the present invention is **characterized in that** it comprises a calibration device, preferably a calibration capillary, which intersects the detection points of the alignment devices comprised in the calibration cartridge. Usually, said calibration cartridge comprises the same amount of alignment devices as the multi-channel separation instrument has separation channels so that each channel can be analysed and calibrated. This has the advantages described above in the summary of the present invention.

Each alignment device allows to precisely align and hence position the excitation means, which preferably is an excitation fiber, with the calibration capillary which intersects the detection point of each alignment device. Optionally also more than one excitation means such as excitation fibers can be aligned in one alignment device what is preferred if also the separation cartridge that is regularly used for separation comprises more than one excitation means. As will be described below, the alignment devices of the calibration cartridge preferably have - except for the calibration device - the same design as the alignment devices that are used with the separation cartridge. At least two alignment devices are provided in the calibration cartridge. Preferably, a multitude of alignment devices are used. Preferably, the number of alignment devices and accordingly the number of detection points corresponds to the number of separation channels that are provided by the separation instrument. As discussed above, respective multi-channel separation instruments are often operated by the use of a multi-channel separation cartridge comprising multiple separation capillaries. Preferably, the design of the calibration cartridge is except for the comprised calibration device substantially identical to the design of the multi-channel separation cartridge that is used for separating analytes. To use a calibration cartridge which substantially has the same design as the separation cartridge has the advantage that the measurement conditions substantially correspond to the measurement conditions that occur when the separation instrument is in use for separating analytes. The alignment devices can be provided as one piece e.g. as one building unit or, preferably, as separate alignment devices. Using separate alignment devices has the advantage that the manufacturing process of the calibration cartridge can be simplified.

Preferably, the design of the alignment devices that are used in the calibration cartridge correspond to the design of the alignment devices that are used in the multi-channel separation cartridge that is used in conjunction with the separation instrument for separating analytes. Thus, advantageously, the same building elements can be used for manufacturing the calibration cartridge that are used for manufacturing the separation cartridge. A preferred embodiment of alignment devices is disclosed in WO 2004/055509, the disclosure of which is with respect to the alignment device herein incorporated by reference.

It is preferred that at each detection point of the alignment devices comprised in the calibration cartridge the coupling of the excitation system and the detection system with the calibration device, which preferably is a calibration capillary, is provided under substantially the same conditions as the coupling of the excitation system and the detection system with a separation capillary that is regularly used for separating analytes. This, in order to simulate with the calibration cartridge the analysis conditions that occur when a sample is separated and analysed using a separation capillary which preferably is comprised in a multi-channel separation cartridge. The term "same conditions" in particular refers to having the same geometric relationship of the excitation system with regard to the calibration device and the calibration device with regard to the detection system as the excitation system with regard to the separation capillary and the separation capillary with regard to the detection system. Thus, the light which emanates from the excitation system illuminates the calibration device substantially with the same angle as the light which will illuminate the separation capillary. As discussed above, the calibration device preferably is a calibration capillary.

Preferably, the alignment device is provided by as alignment block. Each alignment block comprises, respectively provides a detection point which allows to optically couple the alignment block with the detection system of the separation instrument. As discussed above, the detection point may be provided by an aperture in the alignment block. The alignment block supports the alignment of the one or more excitation fibers of the excitation system and the calibration device, which preferably is a calibration capillary. The excitation fiber(s) of the excitation system and the calibration device are preferably fixed in the alignment block in a defined position or orientation to each other. Suitable embodiments for fixing the calibration device and the one or more excitation means are described below. The use of an alignment block offers the advantage of easy to use and easy to manufacture elements which can be placed in the calibration cartridge. Further, the geometry of the alignment blocks can be chosen such that the same alignment blocks can be used for the calibration cartridge that are used for the separation cartridge which comprises a plurality of separation capillaries.

Preferably, each alignment device is an alignment block having an outer face and an inner face, wherein at least two grooves are provided on the outer face which intersect the detection point of the alignment block. Each groove is sized and shaped to receive either the calibration device or an excitation means such as an excitation fiber. When the calibration device which preferably is a calibration capillary is positioned within the capillary groove and an excitation fiber is positioned within the fiber groove the excitation fiber is substantially precisely aligned with the calibration device which intersects the detection point of each alignment device. Preferably, all alignment devices align the excitation fiber(s) in substantially the same angle or position with respect to the calibration device which intersects all alignment devices at their detection points. This precise alignment of the excitation fiber(s) with respect to the calibration device increases the accuracy of the measurement at the different detection points because substantially the same optical framework settings are provided in each run and/or at each detection point. The excitation fiber, e.g. the end of the excitation fiber, illuminates the calibration device at a predetermined angle specified by the alignment device. Preferably, the end of the excitation fiber illuminates the calibration device at the detection point. In particular, the excitation fiber may illuminate the detection point.

In a preferred embodiment the alignment block includes a plurality of grooves which are symmetrically arranged. This allows a simple manufacture of the alignment blocks. Using a symmetrical arrangement of the grooves allows a manufacture in which the alignment block has no orientation, which is preferred. Most preferably the grooves are arranged in a rotational symmetric arrangement. As discussed above, it is preferred to use the same alignment block design for the calibration cartridge that is used for the alignment blocks of the separation cartridge. Preferably, the capillary groove and the fiber groove span an angle of approximately 90° or less, preferably of approx. 45°. This offers a simple possibility to use the same angle between the calibration device and the fiber of the excitation system that is used between the separation capillary and the fiber of the excitation system, while still using only a single calibration device, preferably a calibration capillary, that runs through all detection points of the alignment blocks. Preferably, the alignment block comprises two long fiber grooves or four short fiber grooves which intersect the detection point and are symmetrically oriented to each other in the form of an X (see also the figures), wherein one capillary groove intersects the symmetrically oriented fiber grooves. Thereby, a 45° arrangement as described above can be achieved.

The capillary grooves of the alignment blocks can be aligned to each other such that a single calibration capillary can be positioned within the capillary grooves of the different alignment blocks, whereby the calibration capillary intersects the detection points of multiple and preferably all alignment blocks. Preferably, the capillary grooves are horizontally aligned as this allows to use of a regularly, straight shaped capillary as calibration capillary which can then be inserted into the horizontally aligned capillary grooves. However, also other geometrical designs of the calibration device are possible, as long as the calibration device intersects the detection points of the alignment blocks. According to one embodiment, the calibration cartridge comprises alignment blocks which have the same structure and dimension as the alignment blocks of the multi-channel separation cartridge, wherein in the calibration cartridge the alignment blocks are positioned such that the grooves of the alignment blocks adapted for receiving the capillary are aligned horizontally so that the calibration device which preferably is a calibration capillary can be easily positioned into said aligned grooves. Thereby the calibration device intersects the detection points of the alignment blocks of the calibration cartridge. If using an alignment block as is used in the separation cartridge for aligning the excitation means with the separation capillaries, a horizontal alignment of the capillary grooves can be easily achieved by turning the alignment blocks by 90°. If two long or four short fiber grooves are used that are oriented in the form of an X (see above), the excitation means, which preferably is an excitation fiber, can be received by another fiber groove that is due to the symmetrically arrangement positioned in the same angle towards the capillary groove. A respective arrangement is described in detail in the figures.

The multi-channel separation cartridge that is regularly used on the separation instrument for separating analytes comprises multiple separation capillaries. Each of the separation capillaries may have transparent walls, or opaque walls provided with a transparent window, also referred to as detection window, to direct emissions to the detection system. The calibration device of the calibration cartridge, which preferably is a calibration capillary has, when associated with the alignment blocks, at least at the detection points substantially the same optical characteristics as the separation capillaries of the multi-channel separation cartridge at the detection points of the alignment blocks, when the separation capillaries are used for separating analytes. This ensures that the measurements with the calibration cartridge are comparable to the measurements that are performed with the separation capillaries.

According to a preferred embodiment, the calibration device comprises a calibration marker. Preferably, the calibration device, which preferably is a calibration capillary, comprises a calibration marker which has substantially the same optical properties as the marker which is used for marking the analytes to be separated on the separation instrument. Preferably, the excitation and emission spectrum is substantially similar. Substantially similar preferably means that the respective spectra are similar in shape and comprise substantially the same center wave length and/or have a deviation with regard to the full width at half maximum of less than +/- 25%, more preferred less than +/- 20%, most preferred less than +/-15%. Of particular interest is the similarity of the emission spectrum of the calibration marker to the analyte marker that is used for marking the analytes. Thus, in case that the respective spectrum of the marker used for marking the analytes comprises a shape similar to a Gaussian curve - which is preferred over a shape comprising a peak as a singularity - the shape of the spectrum of the calibration marker comprises a shape similar to a Gaussian curve, too. Preferably, the full width at half maximum deviates between the spectra of the marker used for marking the analytes and the calibration marker by less than +/- 25%, more preferred less than +/- 20%, most preferred less than +/- 15%. Further, the distance between the center wave length of the spectrum of the marker used for marking the analytes and the center wave length of the spectrum of the calibration marker is equal to or lower than 50nm, preferably 30nm, more preferred 25nm, more preferred 20nm, most preferred 15nm. For example, the marker used for marking the analytes can be an intercalating dye such as EtBr with an absorption center wave length of about 480nm +/- 10nm and an emission center wave length of about 610nm +/- 10nm. The calibration marker can be stilbene with an absorption center wave length of about 490nm +/- 10 nm and an emission center wave length of about 620nm +/- 10nm. Using a stilbene derivative as calibration marker matches well the properties of Etbr as intercalating dye, as both markers have a shape resembling a Gaussian curve and have a distance between their center wavelengths of approx. 10nm.

The type of marker can vary depending on the analytes to be separated. According to one embodiment, the calibration device comprises a calibration marker having the same optical properties as the marker which is used for marking the analytes to be separated on the separation instrument, when said marker is associated with the analytes. It is within the skill of the practitioner to identify an appropriate calibration marker for a specific analyte marker using the teachings provided herein.

According to one embodiment, the analyte marker is for marking nucleic acids, preferably DNA and/or RNA. Nucleic acid markers include but are not limited to intercalating dyes, major groove binders, minor groove binders, external binders, bis-intercalators, nucleic acids stains, cyanine dyes, blue-, green-, orange-, and red fluorescent dyes, phenanthridinium dyes, acridine dyes, indole dyes, imidazole dyes, fluorescent intercalators and nonintercalating nucleic acid dyes. An overview over intercalating cyanine dyes is provided in Deligeorgiev et al in Recent Patents on Material Science 2009, 2, 1-26, herein incorporated by reference. Furthermore, also labeled or otherwise marked oligonucleotides or probes can be used as analyte marker. This embodiment is e.g. useful if the analyte to be separated is an amplification product such as a PCR product that is marked with a labeled oligonucleotide probe. Such labeled oligonculeotides bind to the nucleic acid for which they are specific, thereby being associated with and marking the analyte. As described above, the calibration device preferably comprises a calibration marker having the same optical properties as the marker which is used for marking the analytes. This is in particular feasible if the calibration device, which preferably is a calibration capillary, has the same optical properties as the separation capillary that is used for separating the analytes. If the optical properties would deviate, this could be considered in the choice of the calibration marker to ensure that the calibration device has, when associated with the alignment blocks, at least at the detection points substantially the same optical characteristics as the separation capillaries of the multi-channel separation cartridge at the detection points of the alignment blocks, when the separation capillaries are used for separating analytes.

According to one embodiment which is preferred if the analytes to be separated are nucleic acids the calibration device, which preferably is a calibration capillary, comprises a calibration marker having the same optical properties as an intercalating nucleic acid marker which is used for marking the nucleic acids to be separated, when said intercalating nucleic acid marker is intercalated with the nucleic acids. The intercalating nucleic acid marker that is used during separation for marking the nucleic acids and which accordingly is the reference for the optical properties that must be established by the calibration device is preferably a dye which is capable of fluorescence under appropriate conditions. Suitable intercalating dyes that are regularly used for marking nucleic acids include but are not limited to ethidium bromide, SYBR green, SYBR safe and the intercalating dyes described and referred to above. The capillary device, respectively the calibration marker comprised therein, mimics with respect to the optical characteristics the intercalated dye.

According to one embodiment, the calibration capillary is filled with a fluid having the same optical properties as the marker which is used for marking the analytes to be separated and analysed when said marker is associated with the analyte(s). More preferably, the fluid in the calibration capillary comprises a dye as calibration marker having the same optical properties as the analyte marker if said analyte marker is associated with the analytes, e.g. intercalated with nucleic acids, preferably DNA, if an intercalating fluorescent dye such as ethidium bromide is used as nucleic acid marker. The term "optical properties" is preferably to be understood as having substantially the same emission as well as excitation spectra such that filters having a specific window used in the optical path can be appropriately used for analyzing as well as calibrating and preferably, the wavelength of the peak in the emission /excitation spectrum lies within a range of about 20nm, preferably about 15 nm. According to one embodiment, the excitation spectrum lies in a range of 400nm to 550nm, preferably 450nm to 500nm, more preferably 480nm to 490nm and the emission spectrum lies in a range of 550nm to 650nm, preferably in a range of 600nm to 640nm, and more preferably 615nm to 635nm. Preferably, a fluorescent dye is used as calibration marker. The term "fluorescence dye" is to be understood as any dye containing a fluorophore, which is a component of a molecule causing the molecule to be fluorescent. Thus, the fluorescence dye is able to absorb energy of a specific wavelength and re-emit energy at a different specific wavelength. The intensity of the re-emitted energy can be detected by a light detector and might depend on the temperature of the fluorescence dye.

The use of a fluid comprising a calibration marker in the calibration device, which preferably is a calibration capillary has the advantage that even if the calibration marker ages over time, e.g. bleaches, said aging effect is diluted within the capillary. Thus, it takes a long time until a significant difference in the measurement is detectable and the calibration device has to be replaced. The use of a single calibration device, preferably a single calibration capillary, has also the advantage that the manufacturing costs are low.

Furthermore, the calibration cartridge of the present invention allows to adjust the signal level based on the concentration of the calibration marker in the calibration device. Thus, it is possible to analyse the sensitivity of the separation instrument. According to one embodiment, more than one calibration device, which preferably is a calibration capillary, is provided which comprise the calibration marker in different concentrations. According to one embodiment, a set of calibration cartridges is provided wherein each of the calibration cartridges comprises a calibration device comprising the calibration marker in a different concentration, or more than one calibration device can be provided for one calibration cartridge, wherein each of said calibration devices comprises the calibration marker in a different concentration. Here, the calibration devices would have to be replaced in the calibration cartridge if a measurement with a calibration device comprising a different concentration of calibration marker is desired. Alternatively, instead of using calibration devices comprising the same calibration marker in different concentrations, calibration devices comprising different types of calibration markers can be used.

According to one embodiment, a compound is used as calibration marker which comprises at least one conjugated π-electron system comprising two uncondensed aromatic rings. According to one embodiment, the aromatic rings are benzene rings. The aromatic rings may be linked by an ethene group. According to one embodiment, the π-electron system is the 1,2-diphenylethene chromophore which can be present in the cis or in the trans configuration. Preferably, the calibration capillary comprises as calibration marker stilbene or a stilbene derivative. Preferably, the stilbene or stilbene derivative has substantially the same optical properties as ethidium bromide when intercalated with nucleic acids. Ethidium bromide is an intercalating agent that is widely used as a fluorescent marker in molecular biology, especially in the field of separating nucleic acids using agarose gel electrophoresis. According to one embodiment, the stilbene is cis-1,2,-diphenylethene (cis-stilbene) or trans-1,2-diphenylethene (trans-stilbene). The use of stilbene or stilbene derivates offer the advantage that they are non-toxic and do not bleach over a long lifetime. To ensure a maximum lifetime, oxidation should be prevented e.g. by air tight sealing of the capillary. Preferably, the calibration marker in particular the stilbene or stilbene derivative is used in a concentration that lies in a range of 0,5µg/ml to 2,5µg/ml, preferably 0,75µg/ml to 1,5µg/ml, most preferred 1µg/ml. Preferably, the calibration marker is provided in an organic solvent such as DMSO, which has positive effects with regard to the prevention of oxidation because DMSO blocks the oxygen.

According to one embodiment, the multi-channel separation cartridge that is used on the separation instrument for separating analytes comprises a plurality of alignment blocks having an outer face and an inner face, wherein at least two grooves are provided on the outer face which intersect the detection point of the alignment block, wherein each groove is sized and shaped to receive either a separation capillary or an excitation fiber and wherein when the separation capillary is positioned within the capillary groove and an excitation fiber is positioned within the fiber groove the excitation fiber is substantially precisely aligned with the separation capillary in a specific angle. To achieve a corresponding arrangement in the calibration cartridge, the excitation fiber is aligned with the calibration capillary substantially in the same angle in the alignment blocks of the calibration cartridge as the separation capillary and the excitation fiber in the alignment blocks of the multi-channel separation cartridge.

According to one embodiment, the calibration cartridge comprises support blocks that are engaged with the outer face of the alignment blocks for maintaining the calibration device, preferably a calibration capillary and the excitation means, which preferably is an excitation fiber positioned within the grooves. The support blocks ensure that the calibration capillary and the excitation fiber are securely positioned and remain correctly aligned within an alignment block. According to one embodiment, a locking mechanism is provided for engaging each alignment block with the corresponding support block. The locking mechanism may comprise a first pair of male and female parts provided on the outer face and a second pair of male and female parts provided on the support block, wherein the alignment block is engaged to the support block by mating the male part of the alignment block with the female part of the support block and mating the male part of the support block with the female part of the alignment block. According to one embodiment, the male part includes a pin, and wherein the female part includes a hole adapted to receive the pin in a press fit. According to one embodiment, the support block is with respect to the arrangement of the grooves substantially identical to the corresponding alignment block. According to a preferred embodiment, the support block is identical to the corresponding alignment block.

According to one embodiment, an aperture is defined through the outer and inner faces at the detection point of an alignment element. Furthermore, a lens seat can be provided on the inner face for seating a lens device of the detection system of the separation instrument, wherein the lens seat opens to the detection point of the alignment block. Preferably, when the lens device of the separation instrument is seated within the lens seat the lens device is optically coupled with the calibration device which preferably is a calibration capillary, through the aperture of the alignment block. According to one embodiment, the alignment block includes a port at the inner face to facilitate seating the lens device within the lens seat. Suitable designs are described in WO2004/055509.

According to a second aspect, a separation instrument is provided comprising a calibration cartridge according to the first aspect according to the present invention. Details with respect to the calibration cartridge were described above. It is referred to the above disclosure which also applies here. Said separation instrument comprises a plurality of excitation systems, wherein each excitation system is associated with a different alignment device of the calibration cartridge when said calibration cartridge is inserted into the separation system. Said excitation system comprises at least one radiation source, in particular a light source such as preferably an LED, which is associated with the excitation means comprised in each alignment device of the calibration cartridge when said calibration cartridge is inserted into the separation instrument. The excitation means, which preferably is an excitation fiber, allows to introduce excitation radiation from the radiation sources to the detection points of the alignment devices. Furthermore, the separation instrument comprises a plurality of detection systems for detecting radiation emissions at the detection points of the alignment devices. Here, each detection system is associated with a different alignment device. A respective separation instrument preferably is a capillary electrophoresis instrument which is used with a multitude of separation capillaries. Preferably, the separation capillaries are provided in form of a separation cartridge, which comprises the separation capillaries. Suitable separation cartridges are e.g. described in WO2004/055509, herein incorporated by reference. To ensure an accurate measurement with the respective separation cartridges in all separation capillaries, the separation instrument can be tested and calibrated using the calibration cartridge according to the present invention in order to ensure that the physical framework conditions are at each channel substantially the same or are adjusted to achieve said effect.

According to a preferred embodiment, the separation instrument comprises control means for controlling the radiation sources and the detecting means in a manner such that excitation radiation is introduced at the detection points in a predetermined sequence and radiation emission from the detection point of each alignment device is detected in a time staggered/multiplexed manner.

According to one embodiment, the detection system comprises at least one lens device, wherein when the calibration cartridge is inserted in the separation instrument, each lens device is optically coupled with the calibration device, which preferably is a calibration capillary, through an aperture forming the detection point of the alignment devices. Details with respect to the design of the calibration cartridge and in particular the calibration device are described above, it is referred to the above disclosure.

The calibration possibility will lead to improved results because e.g. deviations of the excitation systems can be individually corrected. Preferably, for further use a memory is provided in the separation instrument which stores e.g. an amplification level for each of the separation channels obtained by measuring the signal for each of the detection zones of the calibration cartridge. Furthermore, electrodes at the separation instrument can be provided for carrying out electrophoresis for each of the separation capillaries. Furthermore, the technology of the present invention is an important tool to control and improve the quality of manufactured separation instruments. If the calibration is performed for the first time, a setting of the devices comprised by the optical detection path of the separation instrument may be performed. For example, the LED intensity (on the emission side) and/or the sensitivity of the photomultiplier (on the detection side) can be adjusted if necessary. Thereby, the accuracy and performance of the separation instruments can be ensured.

According to a third embodiment, a method for analyzing preferably calibrating a separation instrument is provided, wherein the separation instrument comprises a plurality of excitation systems each comprising a radiation source associated with an excitation means and furthermore, a plurality of detection systems for detecting radiation emissions. According to the teachings of the present invention, a single calibration device is provided which is optically coupled to the plurality of excitation means and the plurality of detection systems, wherein a signal is measured with each detection system caused by excitation of the calibration device by each excitation means. Details with respect to the calibration device are described above, it is referred to the above disclosure which also applies here. Preferably, a calibration capillary is used as calibration device which comprises a stilebene or stilbene derivative. Preferably, a single calibration capillary is provided which extends through the detection zones of the separation instrument and a signal is measured at the radiation detector for each detection zone caused by excitation of the content of the calibration capillary by the excitation system. The method offers the improvement that the separation instrument can be corrected for differences in the excitation and/or detection system. Preferably, a calibration cartridge according to the present invention is used for calibrating the separation instrument. Preferably, the separation instrument is a CE instrument. Details with respect to the calibration cartridge and the separation instrument were described above in conjunction with the other aspects of the present invention. It is referred to the above disclosure.

In one embodiment a calibration factor is selected for each excitation and/or detection system or channel based on the signal at the radiation redactor which is stored in a nonvolatile memory. This has the advantage that the calibration has to be done only from time to time. The results of the calibration measurements do not have to be stored, however, in case that the measured values are stored, these can be compared with following measured values, for example to provide an indication with regard to a possible deterioration of the LED used for emission and/or the photomultiplier.

According to a fourth aspect, the present invention provides a calibration device such as preferably a calibration capillary comprising a calibration marker which regarding its optical properties matches the optical properties of an analyte marker that is associated with the analyte to be marker. Preferably, the analyte marker is for marking nucleic acids. Suitable and preferred embodiments are described above, it is referred to the respective disclosure. Preferably, the calibration marjer is a stilbene or stilbene derivative. Preferably the stilbene or stilbene derivative is comprised in a medium, preferably a fluid. As discussed above, preferably, the stilbene or stilbene derivative has substantially the same optical properties as ethidium bromide when intercalated with nucleic acids. Ethidium bromide is an intercalating agent that is widely used as a fluorescent marker in molecular biology, especially in the field of separating nucleic acids using agarose gel electrophoresis. According to one embodiment, the stilbene is cis-1,2,-diphenylethene (cis-stilbene) or trans-1,2-diphenylethene (trans-stilbene). The use of stilbene or stilbene derivates offer the advantage that they are non-toxic and do not bleach over a long lifetime. Preferably, the calibration marker in particular the stilbene or stilbene derivative is used in a concentration that lies in a range of 0,5µg/ml to 2,5µg/ml, preferably 0,75µg/ml to 1,5µg/ml, most preferred 1µg/ml. Preferably, the calibration marker is provided in an organic solvent such as DMSO, which provides positive effects with regard to the prevention of oxidation of the calibration marker. The advantages were described above. The calibration device can be used for analyzing the performance of a separation instrument, in particular a multi-channel separation instrument such as a CE instrument. In particular it can be used for calibrating said instrument. Preferably, said calibration device is comprised in a calibration cartridge according to the first aspect of the present invention. As described above, said calibration cartridge preferably comprises multiple alignment blocks comprising a detection point, wherein the calibration capillary runs through said multiple detection points. Details were described above; it is referred to the above disclosure.

### BRIEF DESCRIPTION OF THE DRAWINGS

Examples of the invention will now be described with reference to the accompanying drawings in which:
Figure 1 shows the basic elements of a capillary electrophoresis instrument that can be used as separation instrument according to the teachings of the present invention.
Figure 2 shows details of an alignment device, here an alignment block comprising an excitation fiber and a separation capillary.
Figure 3 shows an enlarged view of an assembly comprising two excitation systems, two alignment blocks and two detection systems.
Figure 4 shows a perspective view of an alignment block that can be used in the calibration cartridge according to the present invention.
Figure 5 shows an alignment apparatus comprising an alignment block assembled to a support block.
Figure 6 is a cross-sectional view of the alignment apparatus shown in Fig. 5 taken through line 6-6.
Figure 7 is a perspective view of an assembly of a linear array of alignment blocks.
Figure 8 is a perspective view of an assembly of a linear array of support blocks.
Figure 9 is a perspective view of an assembly of a linear array of alignment apparatuses comprising the alignment blocks and support blocks of Fig. 7 and 8.
Figure 10 is a cross-sectional view through two the alignment apparatusses having the design shown in Fig. 5, wherein a calibration capillary runs through both alignment apparatuses and intersect the detection points of each alignment block.
Figure 11 is a schematic view of an embodiment of a capillary device comprising multiple detection windows that can be aligned with the detection points of multiple alignment blocks.
Figure 12 is a perspective view of an assembly of a linear array of alignment apparatuses comprising the alignment blocks and support blocks of Fig. 7 and 8, wherein a single calibration capillary runs through all the alignment apparatuses in the capillary groove of each alignment block, thereby intersecting the detection points of all alignment blocks.

### DETAILED DESCRIPTION OF THE FIGURES

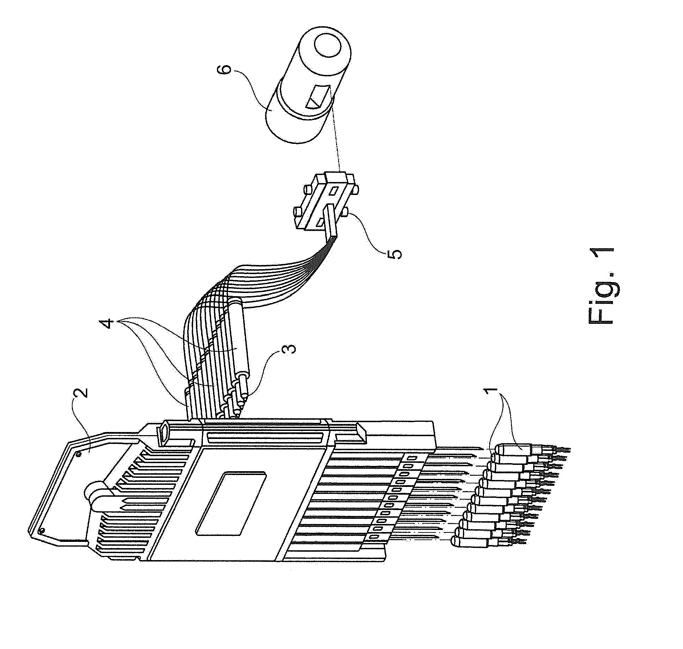

Figure 1 shows the main elements of a capillary electrophoresis (CE) instrument according to one embodiment. The excitation system of the separation instrument comprises a radiation source (1), which can be provided for example by a light source such as an LED. The LEDs are preferably arranged in an array. The number of LEDs in the array corresponds to the number of separation capillaries that are provided in the separation cartridge (2). The structure of the lower body of the cartridge (2) provides the optical alignment means for coupling of the LEDs (1) with the detection lenses (3) of the detection system. The detection system further comprises a fiber array (4), a filter block (5) and a photomultiplier tube (6). Excitation fibers are provided inside the separation cartridge (2). The excitation light from the LEDs (1) is directed through the excitation fibers into the alignment devices. Here, the light hits the separation capillary (one per alignment device), whereby a light is emitted that is detected by the detection lenses (3) that can be optically coupled to the alignment devices. As can be seen, one excitation system is optically coupled with one separation cartridge and one detection lens. As will be described in detail in conjunction with the subsequent figures, the separation cartridge (2) comprises multiple alignment blocks for aligning the excitation fibers with the separation capillaries. Of course, also other cartridge designs are feasible and are for example described in WO 2004/055509.

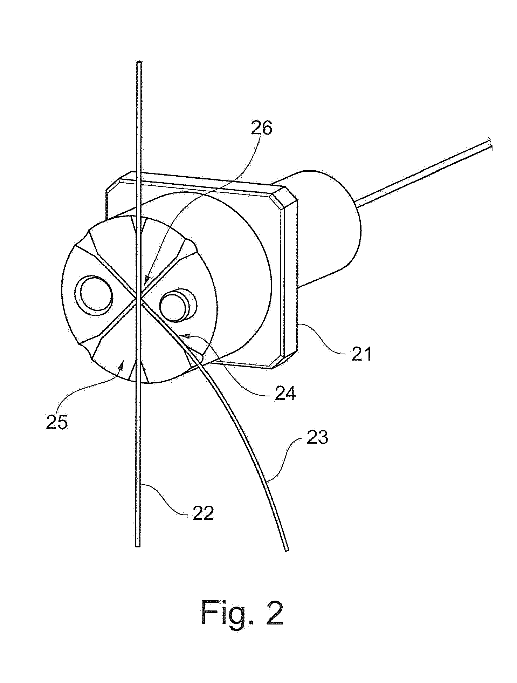

Figure 2 is an enlarged view of an alignment device, here an alignment block 21, which comprises multiple grooves for receiving the capillary (22) and the excitation means, here an excitation fiber (23). The excitation fiber (23) is comprised by the fiber groove (24). The capillary (22) runs through the capillary groove (25). As can been seen, the capillary (22) and the excitation fiber (23) come due to the precise alignment into close proximity at the detection point (26) and the end of the excitation fiber (23) illuminates the capillary (22) at the detection point. The grooves (24, 25) ensure that the excitation fiber (23) is precisely aligned with the separation capillary (22).

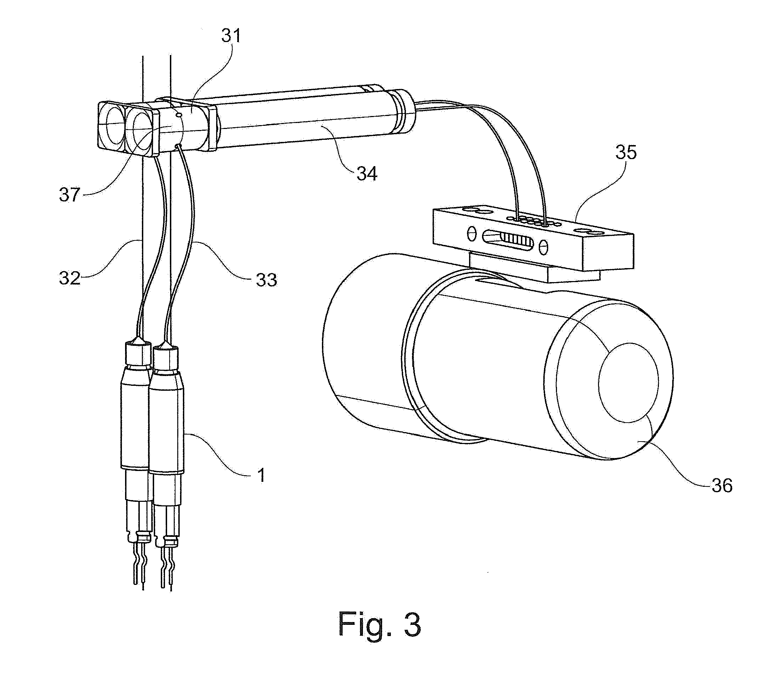

Figure 3 shows the details of the excitation system, the alignment system comprising two alignment apparatuses and the detection system. Here, an embodiment is shown wherein two separation capillaries (32) are provided. The excitation system comprises LEDs (1), which are associated with excitation fibers (33), wherein each fiber (33) is received by an alignment block (31) which is engaged with a support block (37), wherein the alignment block and the support block provide an alignment apparatus. Thereby, each separation capillary and excitation fiber are securely fixed in their position, thereby ensuring the alignment of the separation capillary (32) in a specific orientation towards the excitation fiber (33) in each alignment block. The detection system comprises a detection lens that is not visible in Fig. 3 as it is received by the lens seat of the alignment block (31). The optical lens is associated with a fiber array (34) which comprises in the shown embodiment two fibers. The fiber array (34) is connected via a filter block (35) to a photomultiplier tube (36).

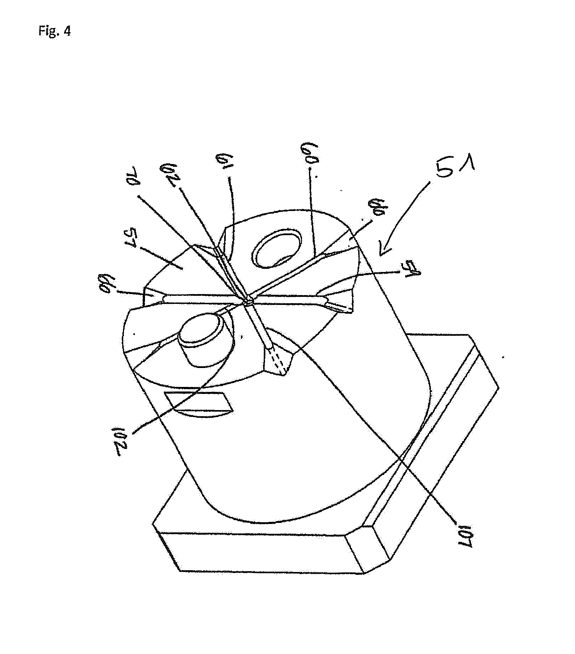

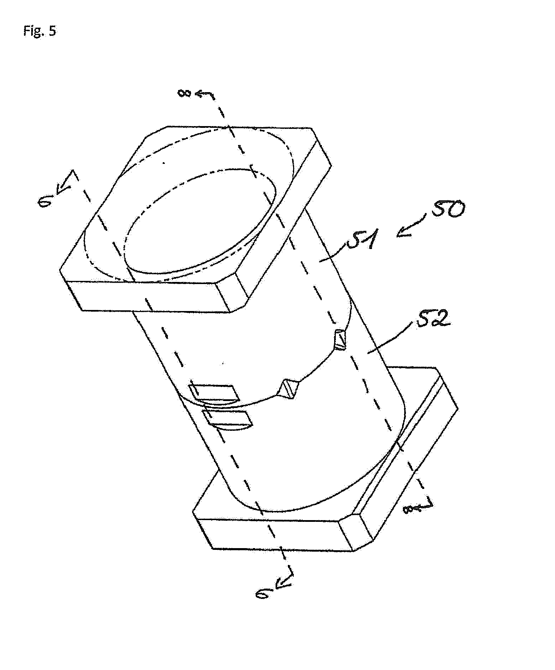

Fig. 4 is an enlarged view of an alignment block (51) which can be used according to the teachings of the present invention for securing the calibration capillary. A respective alignment block is also disclosed in WO 2004/055509, the disclosure of which is herein incorporated by reference. Fig. 5 shows an example of an alignment apparatus (50) comprising an alignment block (51) as shown in Fig. 4 and a support block (52). As can be seen, both elements (51 and 52) match with each other thereby securely holding the excitation fiber and the capillary when inserted into the alignment block. The alignment block (51) includes an outer face (57) and an opposing inner face (58). In the embodiment shown in Figure 4 and 5, the outer and inner faces (57) and (58) have a circular shape. However, the outer and inner faces (57) and (58) can have other geometric shapes, such as a square shape. The outer face (57) comprises a plurality of grooves or channels, such as grooves (59), (60) and (61), defined on the outer face (57). The grooves (59), (60) and (61) facilitate positioning of the capillary and the excitation fiber in precise alignment to each other. The grooves (59), (60) and (61) intersect at a detection point (62) on the alignment block (52). The detection point (62) can be at any point on the outer face (57), such as at the center of the outer face (57), as shown in Figure 5. A groove can span from one edge of the periphery of the outer face (57) to another edge, such as groove (59), or can span from one edge of the periphery to the detection point (62), such as grooves (60) and (61). The grooves (59), (60) and (61) are sized and shaped to receive either a capillary or an excitation fiber. The capillary or the excitation fiber can be nested within the grooves (59), (60) and (61), and positioned such that the capillary or the excitation fiber are precisely aligned with each other. More specifically, the grooves (60) and (61) align the excitation fiber(s) relative to the detection window of the comprised capillary, if a capillary comprising a respective detection window is used. For example, the capillary can be nested in the groove (59) such that the detection window of the capillary is positioned about the detection point (62). The alignment block (51) is capable of supporting one or more excitation fibers. In the embodiment in shown in Figure 5, up to four excitation (or emission collection) fibers can be directed at the detection point (62) where the detection window of the capillary is positioned. For example, a fiber can be nested in groove (60) and another fiber in groove (61). The grooves (60) and (61) guide the excitation fibers to the detection window of the capillary until the ends of the fibers reach the outer diameter of the capillary. The closer the fibers (14) are positioned to the analytes in the separation capillary, respectively the calibration marker in the calibration capillary, the more excitation energy is directed towards the analytes (respectively the calibration marker) and the stronger the emission signal. The grooves allow for precise intersection of the capillary and fibers centerlines. The alignment block (51) can include a beveled opening (66) at the outer end of the grooves (59), (60) and (61). The beveled openings (66) allow the capillary and the excitation fiber to be more easily inserted into the grooves (59), (60) and (61).

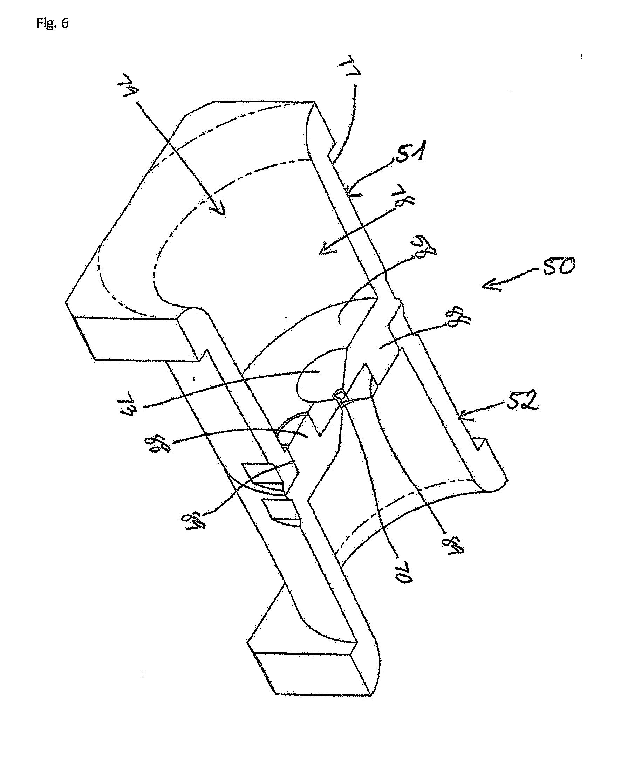

Fig. 6 shows a cross-sectional view of the alignment apparatus (50) shown in fig. 5 taken through the line 6 - 6. The alignment block (51) includes an optical coupling aperture (70). The aperture (70) is a window or opening through the inner and outer faces (58 and 57) at the detection point (62). The aperture (70) allows for optical coupling between the detection window of the capillary on the outer face side (57), and the detection optics of the radiation detector on the inner face side (58) and prevents excessive leakage of scattered excitation light to be detected by the detection lens of the detection system and proportionally controls/reduces the noise. The inner face (58) of the alignment block (51) interfaces with the radiation detector of the detection system. The inner face (58) includes a lens seat (73) for positioning an aligning the radiation detector lens with respect to the aperture (70). The lens seat (73) can be a conical lens seat (as shown in Fig. 6) or alternatively any configuration capable of receiving a detector lens of the detection system, such as a spherical lens seat(not shown). The tip of the conical lens seat (73) opens to the aperture (70) to provide a passage for optically coupling the detector lens with the detection window of the capillary on the outer face side (57).

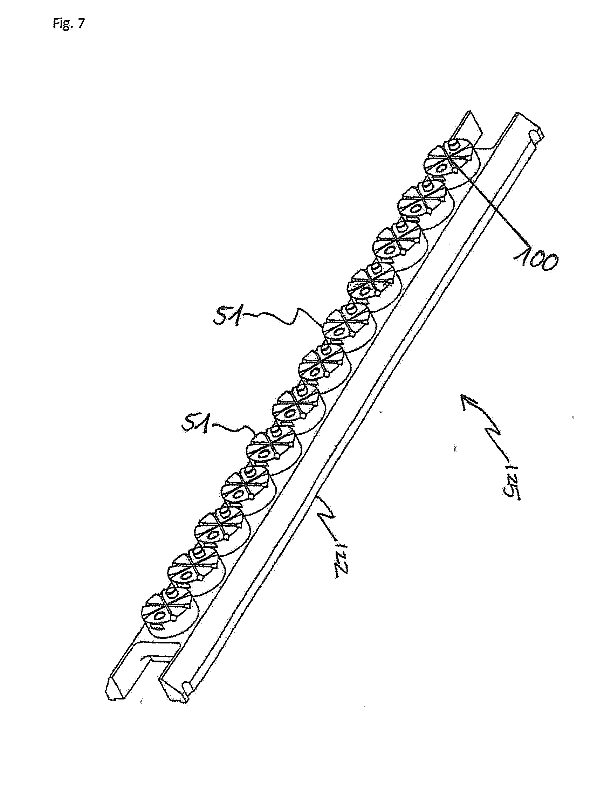

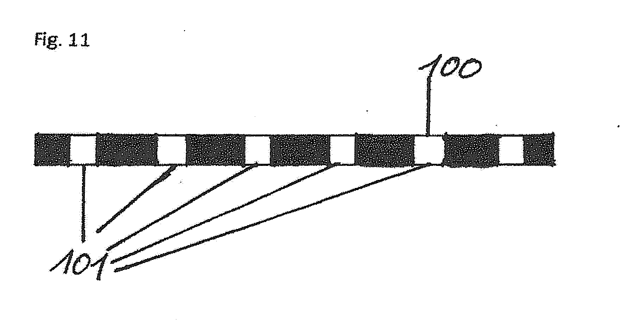

Fig. 7 is an assembly (125) of a linear array of alignment blocks (51). In the shown embodiment, the respective linear array of alignment blocks corresponds to the orientation of the alignment blocks in a separation cartridge. This, because the capillary groove (100) is in vertical orientation so that each alignment block can receive a separation capillary that intersects the detection point. The assembly (125) includes the support bracket (122) holding and positioning a plurality of alignment blocks (51) in a linear array. Each alignment block (51) is removably supported within one of the holes (123) of the support bracket (122). The support bracket (122) allows for one or more alignment blocks (51) to be fitted and removed depending upon the particular requirements of the application. A corresponding assembly of a linear array of alignment blocks can also be used in conjunction with the calibration cartridge according to the present invention. In order to make the respective assembly suitable for used in the calibration cartridge according to the present invention, the alignment blocks merely need to be turned by 90º so that the capillary grooves (100) of the individual alignment blocks (51) are horizontally aligned. This allows a calibration capillary to be inserted into the capillary grooves (100) of the different alignment blocks (51). Thereby, the calibration capillary intersects and accordingly runs through all detection points of all alignment blocks comprised in said assembly. As discussed in the general description, different designs of calibration capillaries can be used. For example, a completely transparent calibration capillary can be used. However, it is also possible to use for example an opaque capillary which comprises multiple detection windows so that when the calibration capillary is inserted into the capillary grooves (100) of the alignment blocks, a detection window is positioned at each detection point of the individual alignment blocks (51) comprised in the assembly. An example of a respective calibration capillary is shown in Fig. 11.

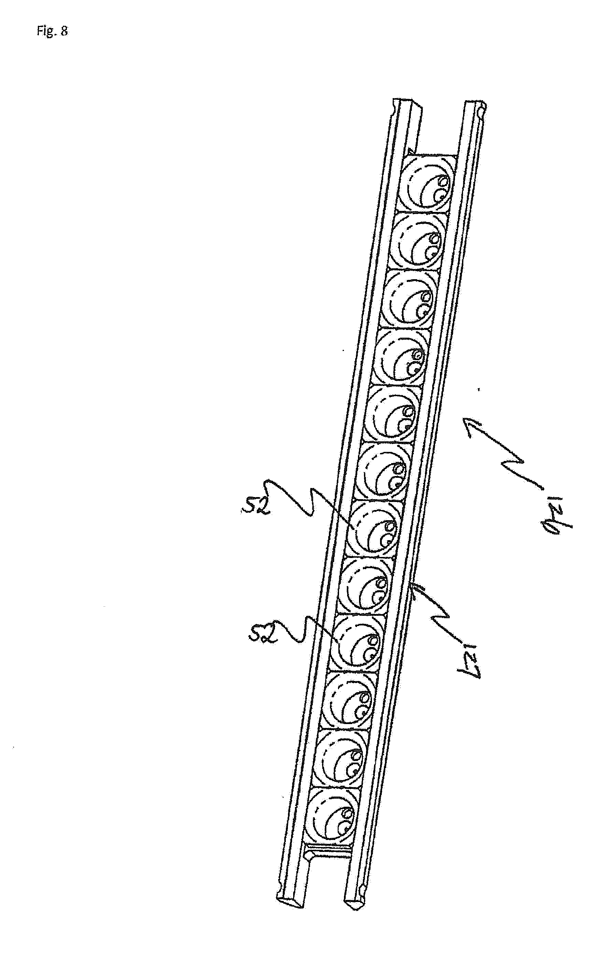

Fig. 8 is a perspective view of an assembly (126) of a linear array of support blocks (52). The assembly (126) includes another support bracket (127) for holding and positioning the plurality of support blocks (52) and linear array to provide the assembly (126) of the linear array of support blocks (53). Each support block (53) is removably supported within one of the holes of the support bracket (127). The support bracket (127) allows for one or more alignment blocks (52) to be fitted and removed depending upon the particular requirements of the application.

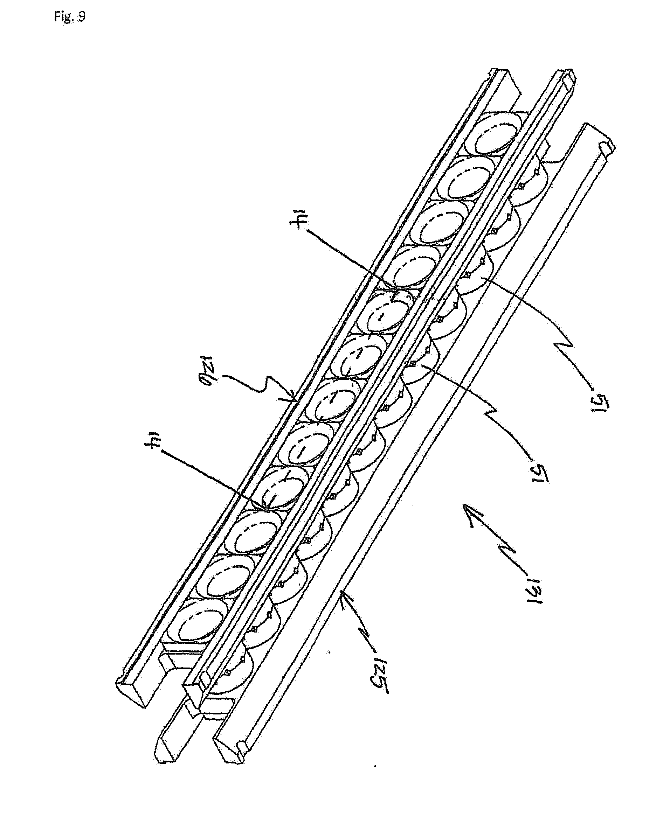

Fig. 9 is a perspective view of an assembly (131) of a linear array of alignment apparatuses (50). The assembly (131) includes the assembly (125) (shown in Fig. 7) and the assembly (126) (shown in Fig. 8) in engagement with each other to form the linear array of alignment apparatuses (50).

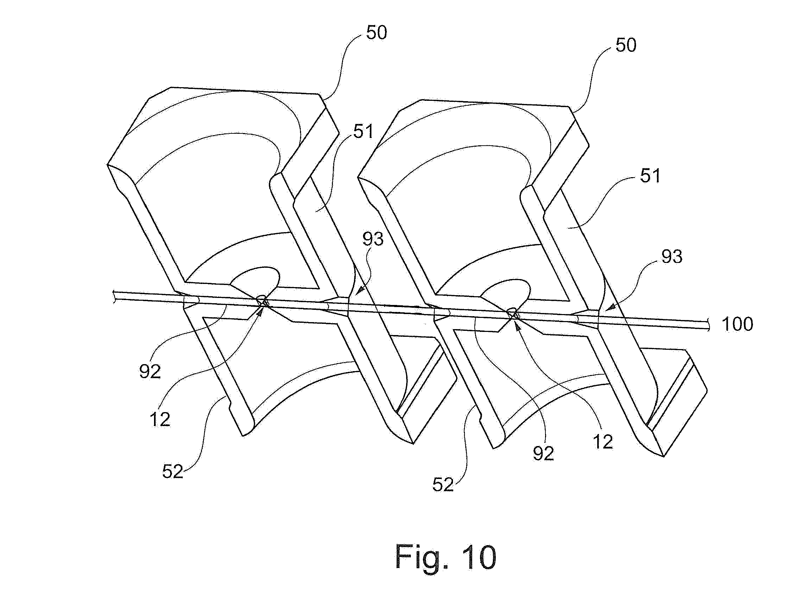

Fig. 10 is cross-sectional view of two alignment apparatuses (50) wherein a calibration capillary (100) runs through the alignment apparatus (50). The alignment block (51) is in engagement with the support block (52) in each alignment apparatus (50). Once the blocks (51 and 52) were locked, a groove of the alignment block (51) interfaces with the corresponding groove of the support block (52) to form a shaft into which the calibration capillary (100) can be positioned. The respective grooves of the different alignment apparatuses (51) are horizontally aligned so that one calibration capillary can be inserted into the respective horizontally aligned grooves of the two alignment apparatuses (50). As can be seen, the calibration capillary intersects each detection point of the alignment blocks. The locking mechanism allows the corresponding grooves to be precisely aligned to form a shaft (92) which receives the calibration capillary (100). The shafts facilitate positioning and alignment of the detection windows (12) of the calibration capillary if a calibration capillary comprising multiple detection windows is used. As discussed in the general description, it is also possible to use a calibration device such as a calibration cartridge which has the same optical characteristics throughout the whole capillary, e.g. when a transparent capillary is used for calibration which comprises a fluid comprising a calibration marker such as preferably a stilbene or stilbene derivative. In the shown embodiment, the calibration capillary 100 has multiple detection windows (12), which become positioned at the detection points of the alignment blocks (51) when the calibration capillary (100) is inserted. In the shown embodiment the two alignment apparatuses (50) are shown in spaced relationship. However, usually when the alignment blocks are aligned in an assembly of a linear array of alignment blocks as shown in Fig. 9, they are positioned directly adjacent to each other. The shaft openings (93) is defined by the beveled openings (66) of the grooves of the plurality of grooves (59, 60 and 61). The shaft opening (93) allows an easy insertion of the calibration capillary. The support block (52) can have any configuration which allows support of the capillary and the excitation fiber(s) within the plurality of grooves. For example, the support block can be a simple plate structure having a face capable of engaging with the outer face of the alignment block (not shown). The alignment block can also be provided with any locking mechanisms that allow for security coupling the alignment block with the support block, such as fixing or gluing the two blocks together.

Fig. 11 shows one embodiment of a calibration capillary (100), which comprises several detection windows (101). When the calibration capillary (100) is inserted into the alignment blocks of the calibration cartridge, each detection window is positioned at a detection point of an alignment block, thereby allowing to collect the light emitted from the detection windows with the associated detection system.

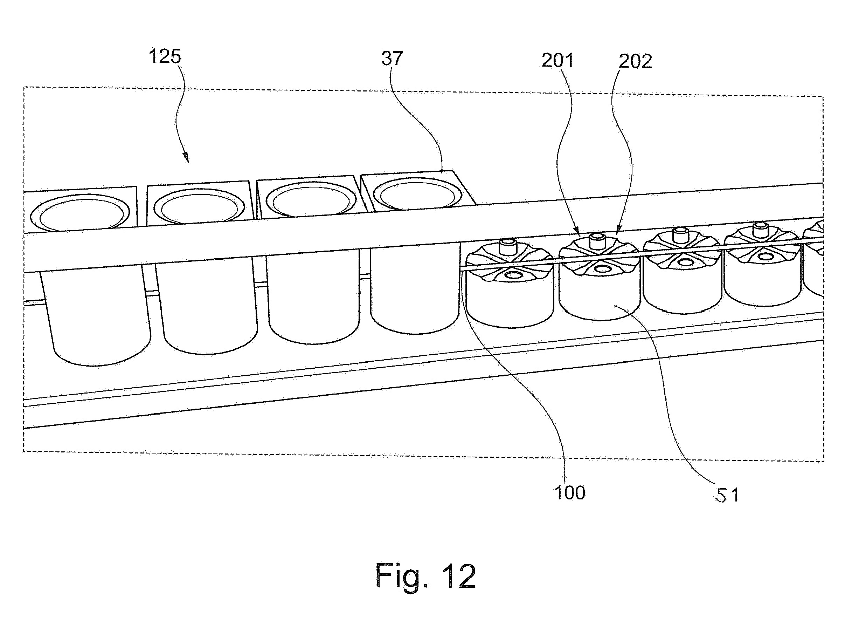

Fig. 12 shows a perspective view of an assembly (125) of a linear array of alignment blocks (51) arranged to be used in a calibration cartridge according to the present invention. As can be seen, the capillary groove of each alignment block are horizontally aligned. Therefore, it is possible to insert one calibration capillary (100) into the capillary grooves of all alignment blocks. The inserted calibration capillary (100) runs through all alignment blocks and accordingly intersects all detection points of the alignment blocks. The calibration capillary shown in this embodiment is completely transparent. This allows for an easy manufacturing. As described above, the calibration capillary is preferably filled with a fluid comprising a stilbene. Stilbene is with respect to its optical characteristics very similar to ethidium bromide when it is intercalated with nucleic acids such as in particular DNA molecules. Thus, as can be derived from Fig. 12, the calibration cartridge according to the present invention allows except for the calibration device/capillary to use the same building elements that are used for the manufacture of the actual separation cartridge, in particular the same alignment blocks, support blocks and supports can be used. On the left hand side, the alignment blocks assembled to the support blocks are shown. Therefore, the manufacturing of the calibration cartridge is very inexpensive as the same building elements can be used that are used for the separation cartridge. All that is necessary is to arrange the alignment blocks differently, so that the capillary is not inserted vertically. Instead, the capillary grooves of the alignment blocks are aligned horizontally so that a single calibration capillary can be inserted into all capillary grooves of the alignment blocks. In the grooves (201 and/or 202) one or more excitation fibers can be inserted. As discussed above, this allows a precise alignment of the excitation fiber to the calibration device. Furthermore, the shown design and arrangement of the grooves has the advantage that the angle of the excitation fiber towards the calibration capillary is the same as in the separation cartridge. In both cases the excitation fiber and the capillary span an angle of approximately 45°.

## Claims

1. A calibration cartridge for a multi-channel separation instrument, **wherein** said calibration cartridge comprises at least two alignment devices for aligning excitation means, wherein each of said alignment devices comprises a detection point **characterized in that** the calibration cartridge comprises a calibration device which intersects the detection points of the at least two alignment devices.

2. The calibration cartridge according to claim 1, **wherein** each alignment device comprises at least one excitation fiber as excitation means.

3. The calibration cartridge according to claim 1, **wherein** the calibration device is a calibration capillary.

4. The calibration cartridge according to claims 2 and 3, **wherein** each alignment device is an alignment block having an outer face and an inner face, wherein at least two grooves are provided on the outer face which intersect the detection point of the alignment block, wherein each groove is sized and shaped to receive either the calibration capillary or an excitation fiber and wherein when the calibration capillary is positioned within the capillary groove and an excitation fiber is positioned within the fiber groove the excitation fiber is substantially precisely aligned with the calibration capillary which intersects the detection point.

5. The calibration cartridge according to claim 4, **wherein** the capillary grooves of the alignment blocks are aligned to each other such that one calibration capillary can be positioned within the capillary grooves of the different alignment blocks, whereby the calibration capillary intersects the detection points of the different alignment blocks.

6. The calibration cartridge according to one or more of claims 1 to 5, **wherein** a multi-channel separation cartridge is used on the separation instrument for separating analytes which comprises separation capillaries and wherein the calibration device of the calibration cartridge has at least at the detection points the same optical characteristics as the separation capillaries of the multi-channel separation cartridge at the detection points.

7. The calibration cartridge according to one or more of claims 1 to 6, wherein the calibration device comprises a calibration marker having the same optical properties as the marker which is used for marking the analytes to be separated on the separation instrument, when said marker is associated with the analytes to be separated.

8. The calibration cartridge according to claim 7, **wherein** the calibration device comprises a calibration marker having the same optical properties as an intercalating nucleic acid marker which is used for marking the nucleic acids to be separated on the separation instrument, when said intercalating nucleic acid marker is intercalated with the nucleic acids.

9. The calibration cartridge according to one or more of claims 1 to 8, **wherein** the calibration device comprises a stilbene or stilbene derivative.

10. The calibration cartridge according to one or more of claims 6 to 9, **wherein**
- the multi-channel separation cartridge that is used on the separation instrument for separating analytes comprises a plurality of alignment blocks having an outer face and an inner face, wherein at least two grooves are provided on the outer face which intersect the detection point of the alignment block, wherein each groove is sized and shaped to receive either a separation capillary or an excitation fiber and wherein when the separation capillary is positioned within the capillary groove and an excitation fiber is positioned within the fiber groove the excitation fiber is substantially precisely aligned with the separation capillary in a specific angle and wherein
- in the alignment blocks of the calibration cartridge the excitation fiber is aligned with the calibration capillary substantially in the same angle as the separation capillary and the excitation fiber on the multi-channel separation cartridge.

11. The calibration cartridge according to claim 10, **wherein** the calibration cartridge comprises alignment blocks having the same structure as the alignment blocks of the multi-channel separation cartridge, wherein in the calibration cartridge the alignment blocks are positioned such that the grooves of the alignment blocks adapted for receiving the capillary are aligned horizontally and the calibration capillary is inserted into said aligned grooves whereby the calibration capillary intersects the detection points of the alignment blocks of the calibration cartridge.

12. A separation instrument comprising
a) a calibration cartridge according to one or more of claims 1 to 11,
b) a plurality of excitation systems, wherein each excitation system is associated with a different alignment device of the calibration cartridge,
c) a plurality of detection systems for detecting radiation emissions at the detection points of the alignment devices, wherein each detection system is associated with a different alignment device.

13. A method for analyzing, preferably calibrating a separation instrument, wherein the separation instrument comprises
a) a plurality of excitation systems each comprising a radiation source associated with an excitation means and
b) a plurality of detection systems for detecting radiation emissions
wherein a single calibration device is provided which is optically coupled to the plurality of excitation means and the plurality of detection systems, wherein a signal is measured with each detection system caused by excitation of the calibration device by each excitation means.

14. The method according to claim 13, wherein a calibration cartridge according to one or more of claims 1 to 11 is used for calibrating the separation instrument.

15. A calibration capillary comprising a stilbene or stilbene derivative.
